# EUROPEAN PATENT APPLICATION

(11) **EP 4 835 685 A1**
(43) Date of publication of application: **04.11.2026**
(21) Application number: 25173767.2
(22) Date of filing: 30.04.2025
(51) Int. Cl.: G06F 16/29, G06Q 50/40

(54) **ORIGIN-DESTINATION DATA**

(71) Applicant: FUJITSU LIMITED, Kawasaki-shi, Kanagawa 211-8588 (JP)
(72) Inventor: SMILOVITSKIY, Maxim, Slough, SL1 2BE (GB); EDGAR, Lowell, Slough, SL1 2BE (GB)
(74) Representative: Haseltine Lake Kempner LLP

(57) **Abstract**

A computer-implemented method comprising: obtaining origin-destination, OD, data; generating an origin distribution by counting, for each geographical area indicated as the origin in the OD data, the number of records which indicate the geographical area as the origin; generating a plurality of destination distributions corresponding respectively to the geographical areas indicated as origins in the OD data; and generating new OD data by: generating at least one new record using a replication process; and generating another at least one new record using a first augmentation process and/or a second augmentation process, wherein the replication process comprises: selecting, as an origin, a geographical area from among the plurality of geographical areas with probability according to the origin distribution; and selecting, as a destination, a geographical area from among the plurality of geographical areas with probability according to the destination distribution corresponding to the geographical area selected as the origin.

## Description

The present invention relates to origin-destination (OD) data replication and augmentation, and in particular to a computer-implemented method, a computer program, and an information programming apparatus.

Whilst working with human mobility simulations, it is common to have mobility patterns described in the form of Origin-Destination (OD) data. One, however, may frequently encounter problems with the quality of real-world OD data. Whether it is supplied by a commercial data vendor or mined from an open source, it is quite common for said data to come out either sparse or incomplete in terms of spatial coverage or feature representation. Consequently, this provides for simulation results that are inaccurate or lacking the depth to mirror real-world dynamics and complexity.

In light of the above, a method for OD data replication and augmentation is desired.

The present invention is defined by the independent claims, to which reference should now be made. Specific embodiments are defined in the dependent claims.

According to an embodiment of a first aspect of the invention there is disclosed herein a computer-implemented method comprising obtaining origin-destination, OD, data comprising a plurality of records, each record (comprising an origin and a destination and) indicating a geographical area of a plurality of geographical areas as an origin and indicating another geographical area of the plurality of geographical areas as a destination; generating an origin distribution by counting, for each geographical area indicated as the origin in the OD data, the number of records which indicate the geographical area as the origin; generating a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and generating new OD data by: generating at least one new record using a replication process; and generating another at least one new record using a first augmentation process and/or a second augmentation process, wherein the replication process comprises: selecting, as an origin, a geographical area from among the plurality of geographical areas with probability according to the origin distribution; and selecting, as a destination, a geographical area from among the plurality of geographical areas with probability according to the destination distribution corresponding to the geographical area selected as the origin, wherein the first augmentation process comprises: randomly selecting as an origin a geographical area from a first subset of the geographical areas, each geographical area of the first subset being indicated as an origin in the OD data less than a first threshold number of times; and randomly selecting as a destination a geographical area from a second subset of the geographical areas, each geographical area of the second subset being indicated as a destination in the OD data less than a second threshold number of times, wherein the second augmentation process comprises: sampling a trip distance from a parametrized distribution; performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

Reference will now be made, by way of example, to the accompanying drawings, in which:
Figure 1 is a flowchart of a method;
Figure 2 is a flowchart of a method;
Figure 3 is a flowchart of a method;
Figure 4 is a flowchart of a method;
Figure 5 is a flowchart of a method;
Figure 6 is a diagram illustrating partitions;
Figure 7 is a diagram useful for understanding embodiments;
Figure 8 is a diagram useful for understanding embodiments;
Figure 9 is a diagram useful for understanding embodiments;
Figure 10 is a diagram useful for understanding embodiments;
Figure 11 is a diagram useful for understanding embodiments;
Figure 12 is a diagram useful for understanding embodiments;
Figure 13 is a diagram useful for understanding embodiments;
Figure 14 is a diagram useful for understanding embodiments;
Figure 15 is a diagram useful for understanding embodiments; and
Figure 16 is a diagram illustrating an information processing apparatus.

### Brief Description of Technical Terms Used (not exhaustive)

- Origin-Destination (OD) Matrix: a table or matrix that represents the flow or movement of entities (such as people, goods, or vehicles) from various origin points to various destination points over a specific period of time. Each row in the matrix corresponds to an origin, and each column corresponds to a destination. The cell at the intersection of a row and a column shows the volume or count of trips, movements, or interactions between that specific origin and destination.
- Traffic Assignment Zone (TAZ): a geographic area used in transportation planning and modeling to group together locations that share similar travel behavior. Each zone typically represents a small region, such as a neighborhood or a district, and is used to analyze traffic flows between different parts of a city or region.
- Markov Chain: a mathematical model that describes a sequence of events or states where the probability of moving to the next state depends only on the current state, not the previous history of states. This property is known as the Markov property or "memorylessness."
- Markov Chain Monte Carlo (MCMC): a class of algorithms used to sample from complex probability distributions, especially when direct sampling is difficult or infeasible. In MCMC, a Markov chain is constructed such that its states are samples from the desired distribution. Over time, as the chain progresses, it moves closer to a distribution that reflects the target.
- Interacting Particle Systems (IPS): mathematical models used to describe and analyze the collective behavior of a large number of individual components (or "particles") that interact with each other over time. Each "particle" represents an entity, such as a molecule, individual, or unit, and its state evolves based on simple local rules that depend on the states of its neighboring particles.
- Mobility on Demand (MOD) data: information related to transportation services that allow users to request and use vehicles or other forms of transport when needed, rather than following fixed routes or schedules. These services are typically technology-driven and can include ride-hailing services (like Uber or Lyft), car-sharing, bike-sharing, e-scooters, and other flexible modes of transportation.

Methodologies disclosed herein provide a tool to resample real world OD data while preserving source distribution, as well as augmenting said data in a meaningful way to enable its saturation, e.g. with patterns that are based on live statistics. In short, the invention described below provides the following technical capabilities:
- Resample original real-world OD distribution in order to achieve required sample count.
- Saturate resampled data with origins and destinations from missing geographical areas.
- Augment OD data using parametrized draws, e.g. with parameters based on live data statistics.

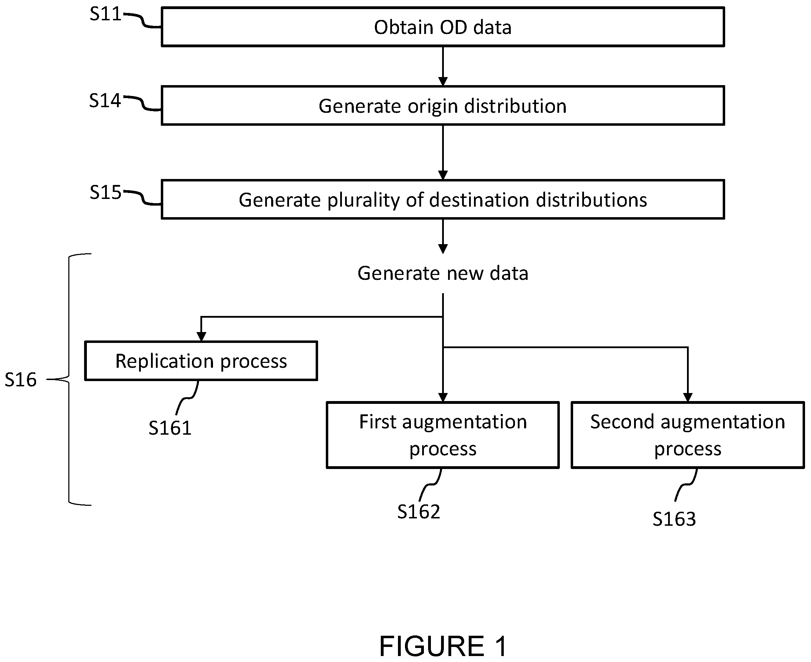

Figure 1 is a flowchart illustrating a method comprising steps S11-S16. Step S11 comprises obtaining OD data. That is, step S11 comprises obtaining origin-destination, OD, data comprising a plurality of records, each record (comprising an origin and a destination and) indicating a geographical area of a plurality of geographical areas as an origin and indicating another geographical area of the plurality of geographical areas as a destination.

Step S14 comprises generating an origin distribution. That is, step S14 comprises generating an origin distribution by counting, for each geographical area indicated as the origin in the OD data, the number of records which indicate the geographical area as the origin.

Step S15 comprises generating a plurality of destination distributions. That is, step S15 comprises generating a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination.

Step S16 comprises generating new OD data. That is, step S16 comprises generating new OD data by: generating at least one new record using a replication process (step S161); and generating another at least one new record using a first augmentation process (step S162) and/or a second augmentation process (step S163).

Step S161 comprises selecting, as an origin, a geographical area from among the plurality of geographical areas with probability according to the origin distribution; and selecting, as a destination, a geographical area from among the plurality of geographical areas with probability according to the destination distribution corresponding to the geographical area selected as the origin.

Step S162 comprises randomly selecting as an origin a geographical area from a first subset of the geographical areas, each geographical area of the first subset being indicated as an origin in the OD data less than a first threshold number of times; and randomly selecting as a destination a geographical area from a second subset of the geographical areas, each geographical area of the second subset being indicated as a destination in the OD data less than a second threshold number of times.

Step S163 comprises sampling a trip distance from a parametrized distribution; and performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

In line with Figure 1, according to an embodiment of a first aspect there is disclosed herein a computer-implemented method comprising: obtaining origin-destination, OD, data comprising a plurality of records, each record (comprising an origin and a destination and) indicating a geographical area of a plurality of geographical areas as an origin and indicating another geographical area of the plurality of geographical areas as a destination; generating an origin distribution by counting, for each geographical area indicated as the origin in the OD data, the number of records which indicate the geographical area as the origin; generating a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and generating new OD data by: generating at least one new record using a replication process; and generating another at least one new record using a first augmentation process and/or a second augmentation process, wherein the replication process comprises: selecting, as an origin, a geographical area from among the plurality of geographical areas with probability according to the origin distribution; and selecting, as a destination, a geographical area from among the plurality of geographical areas with probability according to the destination distribution corresponding to the geographical area selected as the origin, wherein the first augmentation process comprises: randomly selecting as an origin a geographical area from a first subset of the geographical areas, each geographical area of the first subset being indicated as an origin in the OD data less than a first threshold number of times; and randomly selecting as a destination a geographical area from a second subset of the geographical areas, each geographical area of the second subset being indicated as a destination in the OD data less than a second threshold number of times, wherein the second augmentation process comprises: sampling a trip distance from a parametrized distribution; and performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

Each record in the OD data may include a departure time, the computer-implemented method may comprise determining an average of the differences between consecutive departure times, generating the new OD data may comprise generating a plurality of new records, and generating each of second and further records may comprise generating a departure time by sampling a departure time difference from a Poisson distribution characterized by the average of the differences between consecutive departure times in the OD data and adding the departure time difference to the departure time of the preceding new record.

The plurality of geographical areas may be partitions of a geographical region.

The computer-implemented method may comprise partitioning the geographical region to generate the plurality of geographical areas.

Generating the origin distribution may comprise normalizing the numbers of records, and generating each destination distribution may comprise normalizing the numbers of records.

Generating the origin distribution may comprise normalizing the numbers of records to generate a probability mass function and in the replication process selecting, as an origin, a geographical area may comprise sampling a geographical area as a random variable with the probability mass function of the origin distribution; and generating each destination distribution may comprise normalizing the numbers of records to generate a probability mass function and wherein in the replication process selecting, as a destination, a geographical area comprises sampling a geographical area as a random variable with the probability mass function of the destination distribution concerned.

The parametrized distribution may comprise a Gamma distribution or a LogNormal distribution.

The parametrized distribution may be characterized by at least a predetermined average/mean trip distance.

The parametrized distribution may be based on data indicating a plurality of trip distances (covering trips not included in the OD data).

The sampling process may comprise, if the distance is not within the threshold distance range, randomly selecting as the candidate destination location at least one further household location from among the plurality of household locations until the distance between the candidate origin location and the candidate destination location is within the threshold distance range or until a threshold number of further household locations have been selected.

The sampling process may comprise, if the distance between the candidate origin location and the candidate destination location is within the threshold distance range after selecting at least one further household location, selecting the geographical area including the candidate origin location as an origin and selecting the geographical area including the candidate destination location as a destination.

The second augmentation process may comprise, if a threshold number of further household locations have been selected (and the distance between the candidate origin location and the candidate destination location is not within the threshold distance range), repeating the sampling process.

The threshold distance range may comprise as an upper limit the sampled trip distance plus a first amount and as a lower limit the sampled trip distance minus a second amount.

Generating the new OD data may comprise generating a plurality of new records and, for each new record, determining to use the replication process with a first probability and determining to use the first or second augmentation process with a second probability.

The first and second probabilities may be determined according to a desired level of data augmentation.

The computer-implemented method may comprise determining the first and second probabilities according to a desired level of data augmentation.

The second augmentation process may comprise building a bank of candidate OD records as a preprocessing step by iterating steps of: randomly selecting as a candidate origin location a household location from among a plurality of household locations; sampling a trip distance from the parametrized distribution; randomly selecting at least some of the other household locations as preliminary candidate destination locations; selecting, as a candidate destination location a preliminary candidate destination location whose relative distance to the candidate origin location matches or most closely matches or is within a range of the sampled trip distance; and saving the candidate origin location and the candidate destination location in the bank of candidate OD records, and the second augmentation process may comprise, when generating a new OD record, (randomly) selecting a candidate OD record from the bank of candidate OD records.

According to an embodiment of a second aspect there is disclosed herein a computer program which, when run on a computer, causes the computer to carry out a method comprising: obtaining origin-destination, OD, data comprising a plurality of records, each record (comprising an origin and a destination and) indicating a geographical area of a plurality of geographical areas as an origin and indicating another geographical area of the plurality of geographical areas as a destination; generating an origin distribution by counting, for each geographical area indicated as the origin in the OD data, the number of records which indicate the geographical area as the origin; generating a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and generating new OD data by: generating at least one new record using a replication process; and generating another at least one new record using a first augmentation process and/or a second augmentation process, wherein the replication process comprises: selecting, as an origin, a geographical area from among the plurality of geographical areas with probability according to the origin distribution; and selecting, as a destination, a geographical area from among the plurality of geographical areas with probability according to the destination distribution corresponding to the geographical area selected as the origin, wherein the first augmentation process comprises: randomly selecting as an origin a geographical area from a first subset of the geographical areas, each geographical area of the first subset being indicated as an origin in the OD data less than a first threshold number of times; and randomly selecting as a destination a geographical area from a second subset of the geographical areas, each geographical area of the second subset being indicated as a destination in the OD data less than a second threshold number of times, wherein the second augmentation process comprises: sampling a trip distance from a parametrized distribution; and performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

According to an embodiment of a third aspect there is disclosed herein an information processing apparatus comprising a memory and a processor connected to the memory, wherein the processor is configured to: obtain origin-destination, OD, data comprising a plurality of records, each record (comprising an origin and a destination and) indicating a geographical area of a plurality of geographical areas as an origin and indicating another geographical area of the plurality of geographical areas as a destination; generate an origin distribution by counting, for each geographical area indicated as the origin in the OD data, the number of records which indicate the geographical area as the origin; generate a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and generate new OD data by: generating at least one new record using a replication process; and generating another at least one new record using a first augmentation process and/or a second augmentation process, wherein the replication process comprises: selecting, as an origin, a geographical area from among the plurality of geographical areas with probability according to the origin distribution; and selecting, as a destination, a geographical area from among the plurality of geographical areas with probability according to the destination distribution corresponding to the geographical area selected as the origin, wherein the first augmentation process comprises: randomly selecting as an origin a geographical area from a first subset of the geographical areas, each geographical area of the first subset being indicated as an origin in the OD data less than a first threshold number of times; and randomly selecting as a destination a geographical area from a second subset of the geographical areas, each geographical area of the second subset being indicated as a destination in the OD data less than a second threshold number of times, wherein the second augmentation process comprises: sampling a trip distance from a parametrized distribution; and performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

There is also disclosed herein a method comprising steps S11-S15 and the replication process (step S161) as step S16 but not the first or second augmentation process, as well as a method comprising steps S11-S15 and the first and/or second augmentation process (steps S162, S163) as step S16 but not the replication process (step S161). There is also disclosed herein a method comprising using the replication process (step S161) to meet a predetermined data volume and then performing the first and/or second augmentation (steps S162, S163) process to augment the data. There is also disclosed herein a method comprising performing the replication process (step S161) together with the first or second augmentation process (steps S162, S163), followed by performing the replication process (step S161) together with the other of the first and second augmentation processes (steps S162, S163).

In the Figure 1 method, the geographical areas may be TAZs. Some method steps may be implemented using matrix techniques, e.g. in Python (for example as described below).

Methods disclosed herein model origin destination pairs for human trips, based on a distribution observed in the real-world data. The methodology may be considered to use

techniques that are employed to construct particle trajectories when modeling Interacting Particle Systems (IPS), interpreting humans as particles, and their trips as a representation of trajectories. When modeling an IPS, an initial distribution of particles p⁰(t) and a transition matrix P(t) is used. Canonically this data comes from many experimental observations that are done in a controlled environment using particle accelerators. Here, real world human mobility data is used to determine the system's initial state, which is governed by and initial distribution, and its evolution, which is governed by transition distribution. An arbitrary form of map partition may be used to create a finite countable set of system states (e.g. TAZs). An initial distribution p⁰ may be derived from observing a number of trips originating from a particular state (map partition), while a transition distribution may be derived from calculating the number of trips that ended in a particular state, conditional on the state they started from. The nature of OD trips makes them identical to particle trajectories that terminate in one step. Therefore, the question of Markov property, a common condition imposed on IPS models, can be easily satisfied: $\int P \left(x\to y\right) μ \left(dy\right) = 1$ holds for all x, y, where *P (x* → *y)* is a transition density from a state x into a state y.

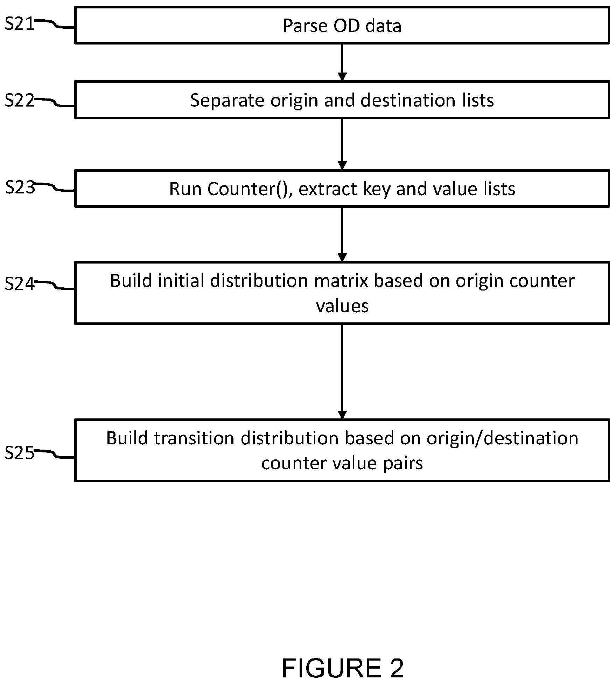

Figures 2-5 are flowcharts illustrating parts of a method which may be considered an implementation of the Figure 1 method. Or each of Figures 2-5 may be considered an implementation of a part of the Figure 1 method. It will be appreciated that various combinations of some or all of the method parts illustrated by Figures 2-5, respectively, may be considered distinct methods.

The description below is divided into two main sections:
1. Data replication process.
2. Augmenting data via saturation.

### 1 Data replication process

### 1.1 Initial setup

This particular method is suited for discreet spatial data distributions with a continuous time parameter. It is assumed that the data comes in the form of a time-stamped trip origin and a non time-stamped trip destination. There's n such origin-destination pairs, and it is assumed they are derived from real-world human movement. Referring to Figure 1, step S21 comprises parsing OD data - which comprises, after extracting data from whichever file format it has been shipped in, obtaining a matrix $A = {\left‖{a}_{ij}\right‖}_{i , j = 0}^{n , 1}$, where n is the number of trips described, and the two columns j = 0 and j = 1 are origin and destination columns respectively. Each origin and destination represents an area on a finitely partitioned map: *aᵢⱼ* ∈ Ω*^{OD}*, ∀ *i,j* ∈ [0, ... , *n*]; Ω*^{OD}* ⊂ Ω, where Ω*^{OD}* is a set of areas represented in the data (e.g. each origin and destination represents a TAZ). A vector *t =* ∥*t₀,* ..., *tₙ*∥ of trip origin time-stamps is considered separately from the OD matrix for modeling purposes and notation convenience.

### 1.2 Constructing an initial distribution

For the purpose of modeling, it is assumed that the system being described evolves in a constant manner. In other words, the following holds for its initial distribution p⁰ and transition distribution P: ${p}^{0} \left({t}_{i}\right) = {p}^{0} \left(t\right) = {p}^{0} , ∀ i ;$ $P \left({t}_{i}\right) = P \left(t\right) = P , ∀ i$

Step S22 comprises separating the origin and destination lists/columns. Step S23 comprises running a counter to extract key and value lists. That is, step S23 comprises applying a counter operator to the vector of origin trips a^{or} = ∥a_{0,0}, a_{1,0}, ..., a_{n,0}∥, a_{i,j} ∈ A: *C*(*a^{or}*) : *a^{or}* ∈ ***R**ⁿ* ↦ *a^{c}* ∈ ***R***^{|Ω^{O}|}, ${a}_{i}^{or} ∈ {Ω}^{OD} ; {a}_{i}^{or} = {\sum }_{{a}_{i}^{or} = \left({Ω}^{OD}, {≲}^{s}\right)} 1$, ∀*s* ∈ [0, ... , |Ω*^{O}*|] *i =* 0,1, ... , *n*; ${a}_{i}^{c} ∈ {a}^{c}$; Ω*^{O}*,Ω*^{D}* ⊂ Ω*^{OD}*, where Ω*^{O}* and Ω*^{D}* are sets of origin and destination partitions respectively. Note here that (Ω*^{O}*, 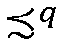 ) is an ordered set with indexing q = 0, 1, ..., |Ω^{O}|, which is used as its members' indices should match vector coordinates of elements in a^{c} when occurrences are counted in a^{or}. The resulting vector will be *a^{c}* = $\left‖{a}_{0}^{c},{a}_{1}^{c},…,{a}_{\left|{Ω}^{O}\right|}^{c}\right‖$.

Step S24 comprises building the initial distribution (which may be referred to as an origin distribution) based on the origin counter values obtained in step S23. That is, in step S24, the vector a^{c} is normalized to obtain the initial distribution: ${p}^{0} : {p}_{s}^{0} = \frac{{a}_{s}^{c}}{{\sum }_{s = 0}^{\left|{Ω}^{O}\right|} {a}_{s}^{c}} , ∀ {a}_{i}^{c} ∈ {A}^{c} ; {p}^{0} = \left‖{p}_{0}^{0},…,{p}_{\left|{Ω}^{O}\right|}^{0}\right‖$

In other words, the processing in this section may be understood as:
1. Parse OD data (step S22)
2. Separate the origin column from the OD matrix (step S22)
3. Run the resulting vector through a counter function (e.g. collections.Counter() in Python) and obtaining the output, a dictionary where keys are (Ω^{O}, 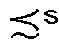 ), and values are a^{c} (step S23)
4. Normalize a^{c} to obtain a probability mass function p⁰ (step S24)

The final step allows the initial distribution of the state of a system to be obtained.

### 1.3 Constructing a transition distribution (step S25)

Step S25 comprises building a transition distribution based on an origin/destination counter's value pairs. This may be understood as constructing a plurality of transition distributions. A special counter operator is applied to the entire matrix A, such that ${C}_{m} \left(A\right) : A ∈ {R}^{n \times 2} ↦ C ∈ {R}^{\left|{Ω}^{O}\right| \times \left|{Ω}^{D}\right|} , {a}_{i , j} ∈ {Ω}^{OD} ;$ ${c}_{k , m} = {\sum }_{{a}_{i , 0} = \left({Ω}^{O}, {≲}^{k}\right)} {\sum }_{{a}_{i , 1} = \left({Ω}^{D}, {≲}^{m}\right)} 1 ; ∀ k ∈ \left[0,…,\left|{Ω}^{O}\right|\right] , m ∈ \left[0,…,\left|{Ω}^{D}\right|\right]$ $i = 0 , 1 , … , n ; {c}_{k , m} ∈ C$

Again, note (Ω*^{O}*, 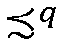 ) and (Ω*^{D}*, 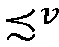 ) are ordered sets with indexing q = 0, 1, ..., |Ω^{O}| ; *v =* 0, 1, ..., |Ω^{D}|, which is used because their members' indices need to match matrix coordinates of elements in C when occurrences are counted in A. The resulting matrix is $C = {\left‖{c}_{k , m}\right‖}_{k , m = 0}^{\left|{Ω}^{O}\right| , \left|{Ω}^{D}\right|}$. In order to obtain the distribution, the matrix C is normalized to get $P : {p}_{k , m} = \frac{{c}_{k , m}}{{\sum }_{m = 0}^{\left|{Ω}^{D}\right|} {c}_{k , m}} , ∀ {c}_{k , m} ∈ C ; P = {\left‖{p}_{k , m}\right‖}_{k , m = 0}^{\left|{Ω}^{O}\right| \left|{Ω}^{D}\right|}$

In other words, step S25 comprises the algorithm below:
1. From the original OD matrix, separate both origin and destination columns.
2. Create ordered sets (Ω*^{O}*, 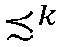 ) and (Ω*^{D}*, 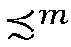 ) from Ω^{O} and Ω^{D}. These will be used as mappings from partition IDs to their matrix coordinates.
3. Create a matrix C of all possible pairs of origin and destination partitions, with rows indexed as origin partitions in (Ω*^{O}*, 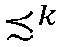 ) and columns indexed as destination partitions in (Ω*^{D}*, 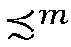 ).
4. In the original OD matrix A, iterate through every OD pair. Using ordered sets obtained in step 2, find each pair's coordinates within C. Increment the respective cell by 1.
5. Normalize C by rows, effectively obtaining a matrix of transition distributions P of destinations with respect to origins.

That is, the transition distribution may be considered a plurality of transition distributions (may be referred to as destination distributions) corresponding respectively to the plurality of origins. The matrix C may be referred to as a transition matrix. A given destination distribution is found by taking one row of the matrix C which corresponds to a particular origin, and normalizing the counter values.

### 1.4 Constructing departure times

It is common for OD data to come in with indications for departure times for each trip. Hence, it may be useful to model departure times for synthetically generated ODs. It is assumed that the time differences between consecutive (in chronological order) trip departure times are Poisson distributed, with λ being the average difference in departure times of the original ODs. To find this parameter, the following steps are used:
1. Find the differences in values (which are in chronological order) of a timestamp vector t from the original data to obtain a vector *d^{t}* = Δ_{*i,i+*1}*t, i =* 0, ... , *n*
2. Calculate mean of d^{t} to obtain λ parameter.

### 1.5 Modeling the data

Having established initial and transition distribution, these can now be used to model synthetic data. The following algorithm is used:
1. Using the initial state distribution vector p⁰, model the initial state of the system (ID of a partition that would serve as an origin of this draw). Use conventional modelling techniques to model origin state as a random variable with the given probability mass function. That is, sample an origin from the origin distribution.
2. Draw d ~ Pois(λ) to obtain the time step between the current and the previous trip. Set *tᵥ = tᵥ₋₁ + d,* where v is the current draw number. If it's the first draw (v = 0), either set tᵥ = 0 or tᵥ = d.
3. Knowing the ID of the sampled origin, extract the corresponding vector $p = \left‖{p}_{{i}_{ID} , 0},{p}_{{i}_{ID} , 1},…,{p}_{{i}_{ID} , n}\right‖$ from the matrix of transition distributions P , where *i_{ID}* is the row coordinate that corresponds to the ID of an origin modeled in step 1. This row is a probability mass function of destination partitions that is conditional on the origin generated in step 1.
4. Using the obtained mass function p, model a new destination ID. Same as in step 1, use conventional modeling techniques to model destination state as a random variable with a given mass function. That is, sample a destination from the destination distribution concerned.
5. Repeat steps 1 to 4 to obtain a desired number of synthetic OD pairs

### 2 Augmenting data via saturation

Sometimes real-world data comes in sparse. While modeling these sparse distributions allows the replication of certain natural patterns of human mobility, sparse data may provide for poor coverage outside of the major map partition areas. To circumvent this issue, and to allow for a more complete modeling coverage, the approach disclosed herein uses at least one of the following methods: Random uniform saturation and Parametrized saturation.

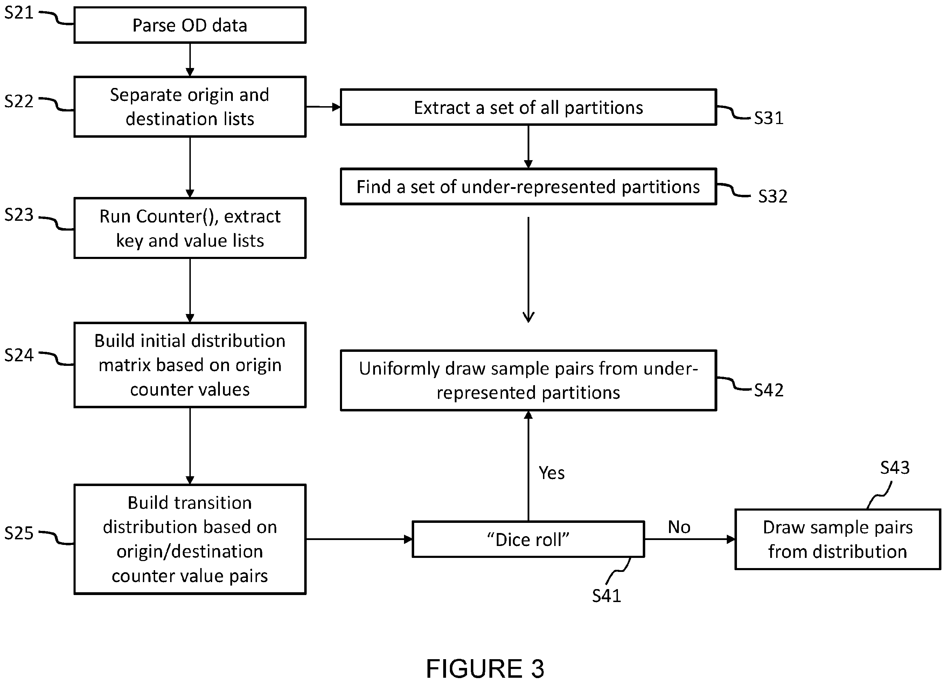

### 2.1 Random Uniform saturation (Figure 3)

Random uniform saturation augments the OD data by generating new OD data for geographical areas which are under-represented or missing in the original OD data. To know the set of missing partition areas for origin and for destination partitions, set operations are used. Step S31 in Figure 3 comprises, knowing the full set of all map partitions Ω, extracting sets of origin and destination partitions Ω^{O}, Ω^{D}, respectively. Step S32 comprises finding sets of under-represented (or missing) partitions. That is, Ω^{MO} = Ω \ Ω^{O}, Ω^{MD} = Ω \ Ω^{D}, where Ω^{MO} and Ω^{MD} are a set of missing origin and destination partitions respectively; also Ω^{M} = Ω^{MO} ∪ Ω^{MD} where Ω^{M} is the set of all missing partition areas. Furthermore, it may be desirable to add partitions that are poorly represented to the set of missing partitions Ω^{M}, to provide more representation for these regions in the augmented data. In order to do that, threshold levels *l*^{Ø,*O*} and *l*^{Ø,*D*} are set, such that $if {a}_{s}^{c} \leq {l}^{∅ , O} \to {Ω}^{MO} = Ω \ \left({Ω}^{O}∪\left({Ω}^{O}, {≲}^{s}\right)\right)$ and $if {\sum }_{k = 0}^{\left|{Ω}^{O}\right|} {C}_{k , s} \leq {l}^{∅ , O} \to {Ω}^{MD} = Ω \ \left({Ω}^{D}∪\left({Ω}^{D}, {≲}^{s}\right)\right) .$

In other words, if there are less than a first threshold number of trips originating from a partition, the partition is added to the set of missing origin partitions, and if there are less than a second threshold number of trips terminating in a partition, the partition is added to the set of missing destination partitions.

Trips/records are generated as noted below and as shown in Figure 3. The random uniform saturation process is described as being performed within the data replication process, but the random uniform saturation process may be performed separately without any data replication process being performed (or after a data replication process). The steps S21-S25 are shown as being performed again, though of course these steps need only be performed once. As a preceding step (or this step may be performed as part of the method), a desired level of saturation sat ∈ [0, 1] is chosen. This is the probability of inserting a randomly generated OD into a replicated distribution.

Step S41 comprises each time an OD record is to be generated in the data replication process, before sampling the origin and destination, a random number generator is used to generate a random number and this is compared with sat to determine if the following OD draw will be from a replicated distribution (as in the data replication process) or will follow the random uniform saturation process. This generation of a random number and comparison with sat is referred to in Figure 3 as "dice roll".

If "no" (if it is determined that random uniform saturation will not be used for this OD record generation) then the method proceeds to step S43 and a record is sampled from the original and transition distributions as described in the data replication process. If "yes" (if it is determined that random uniform saturation will be used for this OD record generation) then the method proceeds to step S42 and a uniform distribution is used to sample origin and destination partitions from Ω^{MO} and Ω^{MD} respectively. A departure time may be generated as described in the data replication process.

### 2.2 Parametrized saturation (Saturation via Synthetic Populations)

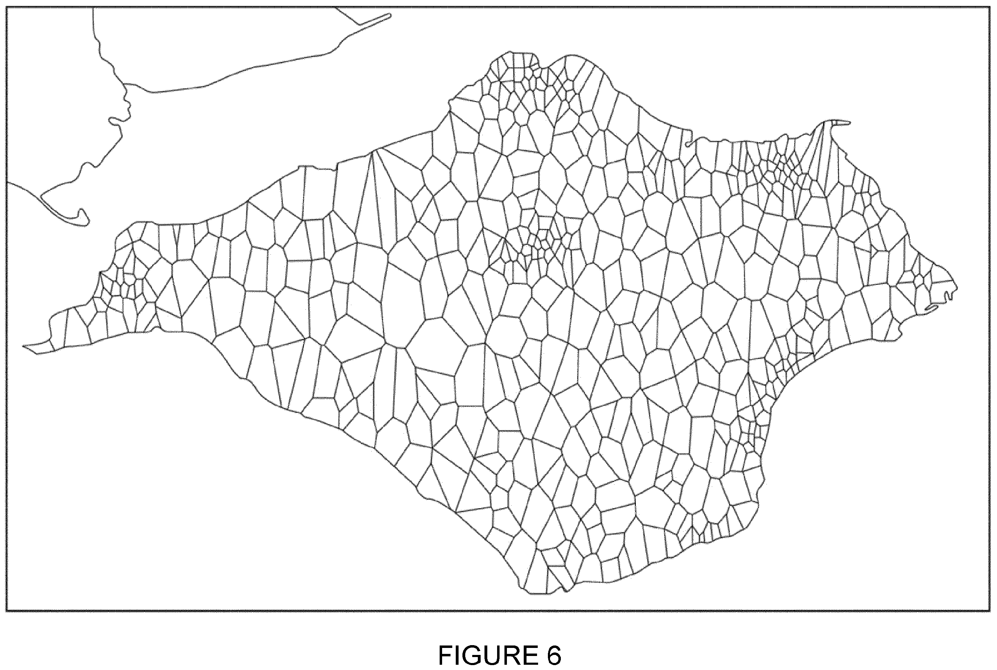

OD data can be additionally or alternatively enhanced by using detailed information on where people live within the region being modelled. Namely, pairs of origin-destination records may be drawn from household locations, which can be obtained from publicly available datasets like OpenStreetMap, or from synthetic population representations of the region. Here, draws are not limited to areas of missing partitions, thus promoting pattern diversity and parametrization capabilities in saturation data. These household locations may be expressed as GPS coordinates (latitude, longitude) and are clustered in regions with higher population densities. Figure 6 illustrates household locations in the Isle of Wight.

Once an origin-destination household location pair is obtained for a new record generation, the household locations are mapped to partition units from Ω using the polygon boundaries of each partition. Here, in order to promote complexity and enhance natural movement patterns, it is not required to limit draws to the missing partition set Ω^{M} as in the case of uniform saturation (in section 2.1).

Performing draws from parametrized distributions offers a more flexible approach towards modelling missing partitions from real-world data. Parametrized distributions allow for control on the distances between ODs the method produces, and may confine the distribution to trips of bounds of interest or be fit using other real-world data. A generalized parametric distribution *Pₗ* = {*F_{θ}*|*θ∈*Θ} may be used to draw a trip distance *l^{trip}* for each record generated, where Θ is the parameter space and θ are parameters corresponding to the model. Suitable options for parametrized distributions of OD trip distances include, for example, a Gamma distribution, with parameters controlling skew and scale: *l^{trip}~*Γ(*k, θ*), with mean trip distance kθ; and a LogNormal distribution with parameters controlling location and scale *l^{trip}~*Z(*µ, σ*), with mean trip distance exp µ + σ²/2 . Beyond parameters controlling the shape of the distribution, additional bound parameters, *l^{max},l^{min}*, may be included to set the minimum and maximum trip length that may be drawn from the distribution. The parametrized distribution may be set up so as to model real-world data. In some implementations, real-world data indicating lengths of trips may be obtained (e.g. not covering the same trips as the original OD data) and modelled using a parametrized distribution, which distribution may be used in the parametrized saturation process. In some implementations the parametrized distribution may not be based on real-world data, per se, and may be obtained based on user preferences.

The algorithm for drawing ODs within a population of households via a parametrized distribution is as follows. The parametrized saturation process is described as being performed within the data replication process, but the parametrized saturation process may be performed separately without any data replication process being performed (or after a data replication process).
1. Choose a desired level of saturation sat ∈ [0, 1]. This is the probability of inserting a randomly generated OD into a replicated distribution and this step may be carried out as a preprocessing step.
2. For each step of a data replication loop described in Section 1 (data replication process), before entering the main loop use a random number generator and sat to determine if the following OD draw will be from a replicated distribution (i.e. according to the data replication process) or will follow the current algorithm (parametrized saturation process).
3. If latter, use uniform distribution to pick a household from Ω as the origin household.
4. Draw a trip distance from the parametrized distribution *l^{trip}*~*Pₗ*: *l^{trip}∈*[*l^{max},l^{min}*].
5. Randomly select a destination household. Calculate the distance *l^{part}* between the coordinates of the household pair.
6. If (1 - *ε*)*l^{trip}* ≤ *l^{part}* ≤ (1 *+ ε*)*l^{trip}* holds, the household pair is accepted.
7. If the above equality doesn't hold, a different household is randomly selected as a destination candidate, and the comparison in step 5 above is repeated.
8. If none of the destination households from Ω could satisfy the equality in step 5 within a maximum number of attempts, the process is repeated starting from step 4, until a suitable candidate pair of household locations is found.
9. Determine the partition each household belongs in to express the newly generated records in the form of partition IDs.

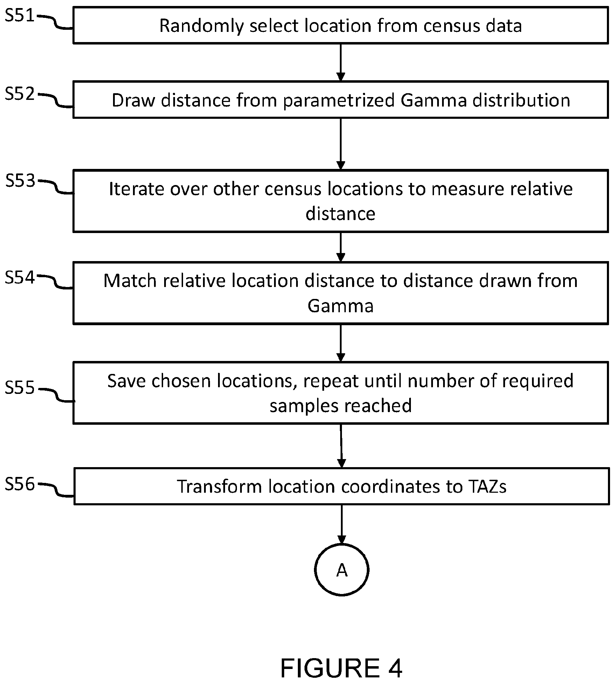

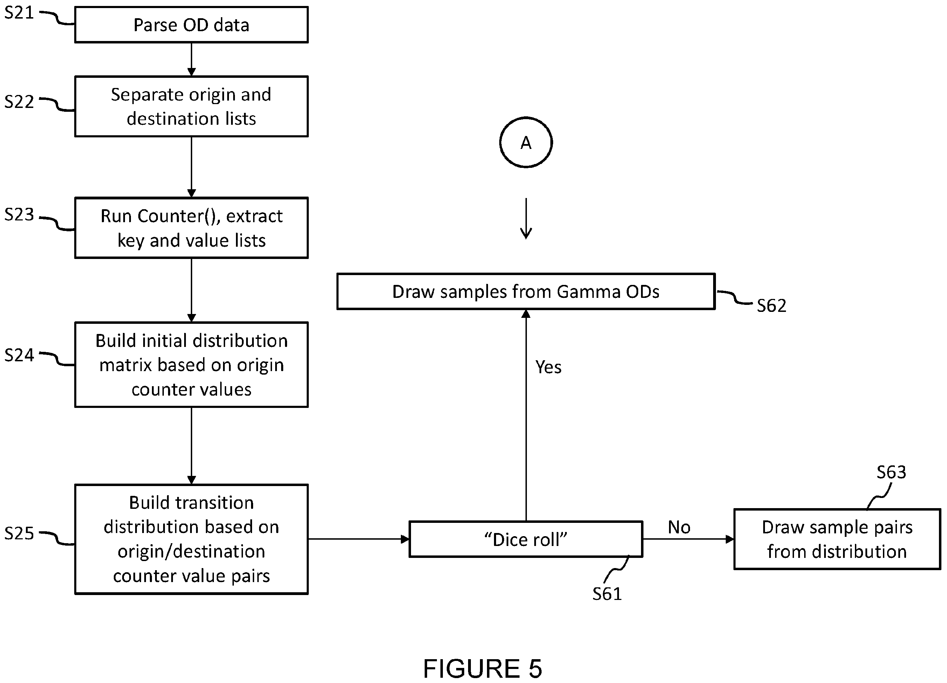

Figures 4 and 5 illustrate a flowchart for an implementation of a method for parametrized saturation. The parametrized saturation process is described as being performed within the data replication process, but the parametrized saturation process may be performed separately without any data replication process being performed (or after a data replication process). The steps S21-S25 are shown as being performed again, though of course these steps need only be performed once. As a preceding step (or this step may be performed as part of the method), a desired level of saturation sat ∈ [0, 1] is chosen. This is the probability of inserting a randomly generated OD into a replicated distribution.

Step S51 comprises randomly selecting a household location as an origin candidate (or candidate origin location), e.g. from census data. Step S52 comprises drawing a distance from the parametrized Gamma distribution (or whichever parametrized distribution is being used). Step S53 comprises iterating over other census locations to measure relative distance. That is, step S53 comprises randomly selecting at least some of the other household locations as destination candidates (or candidate destination locations) and for each destination candidate measuring the distance between the origin candidate and the destination candidate. The distance here is the straight line distance between the two points (or, more accurately, the geodesic between the two points, given the Earth's curvature).

Step S54 comprises matching the relative location distance to the distance drawn from the parametrized distribution. That is, step S54 comprises selecting at least one destination candidate whose relative distance to the origin candidate matches (or most closely matches, or is within a range of) the distance drawn from the parametrized distribution.

Step S55 comprises saving the selected locations (origin candidate and selected (matched) destination candidate) and repeating the steps S51-S55 until a required number of samples is reached, i.e. until a required number of pairs are saved. Step S56 comprises transforming the household locations (location coordinates) in the saved pairs to the partitions/geographical areas/ TAZs. By virtue of the steps S51-S56 a bank of candidate OD records have been generated which may be sampled from in the parametrized saturation process.

In step S61, for each new OD record to be generated, a "dice roll" is carried out to determine whether to generate a new OD record using parametrized saturation or data replication. This may be effected by generating a random number and comparing it with sat. If "no" (if it is determined not to use parametrized saturation to generate the new OD), the method proceeds to step S63 and a new OD record is sampled from the origin and destination distributions according to the data replication process. If "yes" (if it is determined to use parametrized saturation to generate the new OD), the method proceeds to step S62 and a new OD record is randomly drawn from the bank of candidate ODs generated by steps S51-S56. The steps S61-S63 may be repeated until a required number of new OD records have been generated.

The data replication process may be considered an implementation of the replication process described with respect to Figure 1. The random uniform saturation process may be considered an implementation of the first augmentation process described with respect to Figure 1. The parametrized saturation process may be considered an implementation of the second augmentation process described with respect to Figure 1.

Steps S22-S24 may be considered to correspond to step S14, step S25 to step S15, step S42 (or steps S31-S42) to step S162, and step S62 (or steps S51-S62) to step S163. Step S16 may be considered to correspond to step S42 and/or step S62 and/or steps S41-S43 and/or steps S61-S63. Description of one step or steps may apply to the corresponding step(s) and vice versa.

As mentioned above, the saturation processes are each described as being performed together with the data replication process (mediated by sat and a random number generator) but each may be performed separately. There is disclosed herein a method comprising the data replication process, a method comprising the random uniform saturation process, a method comprising the parametrized saturation process, a method comprising performing the data replication process together with one of the saturation processes followed by performing the data replication process together with the other of the saturation processes, among other combinations of the replication and saturation processes.

An example of applying the above-described method is described below.

Data obtained from a transportation network on the Isle of Wight was used. The data came in the form of time-stamped origin and destination series, where both origins and destinations were represented as traffic assignment zones (TAZs). Upon inspection, data has proved to be sparse, with irregular distribution in both origin and destination locations: several partitions were not involved at all, while others had very few trips connected to them. In order to run a large scale simulation to test the traffic network's capacity, it was required to increase the number of people traveling, albeit while preserving natural movement patterns of the original dataset.

The methods disclosed herein were successfully deployed to both increase the number of traveling agents preserving their pattern, as well as saturating TAZs where original data was lacking, using both uniform and Gamma-parametrized saturation for several set-ups. It is also worth noting that prior to saturation, the synthetic distribution with larger population (i.e. the dataset including the original OD data plus new OD data generated by the data replication process) demonstrated an average score of 0.8 in the Kolmogorov-Smirnov test for similarity against the original dataset.

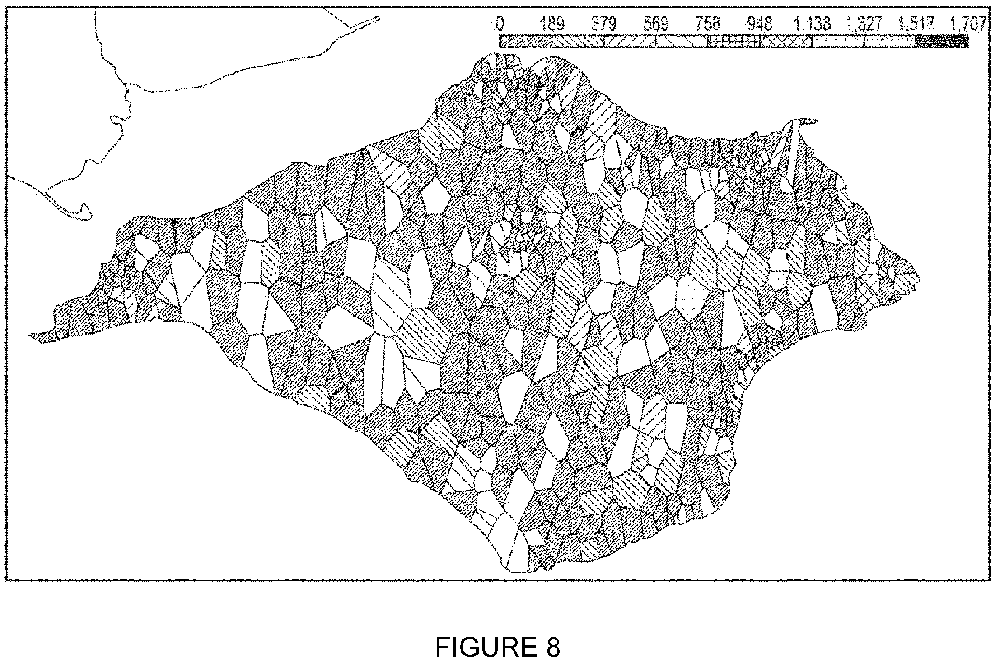

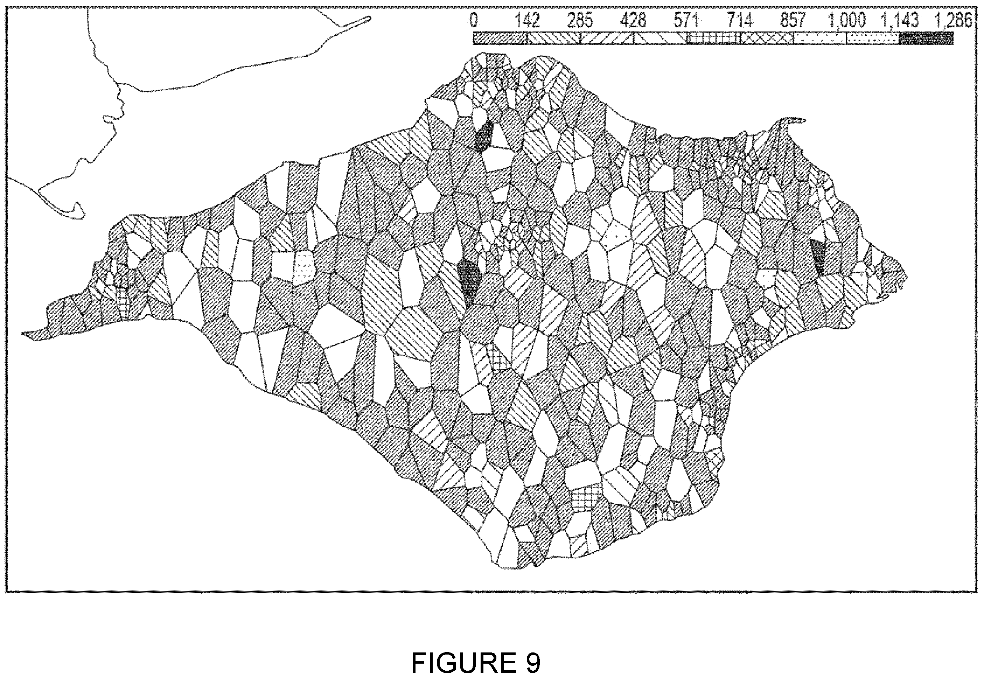

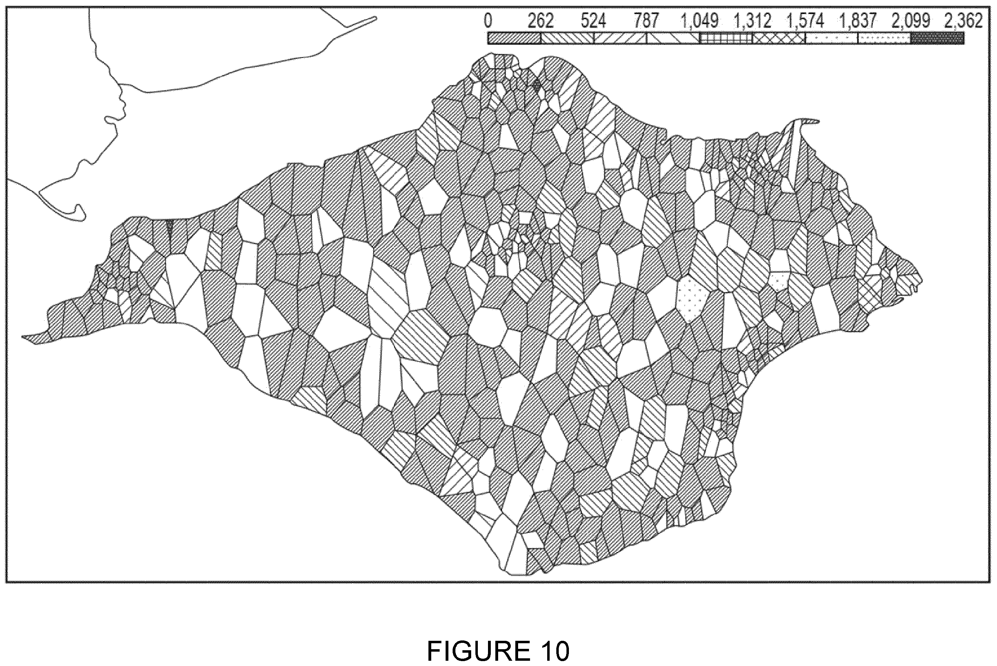

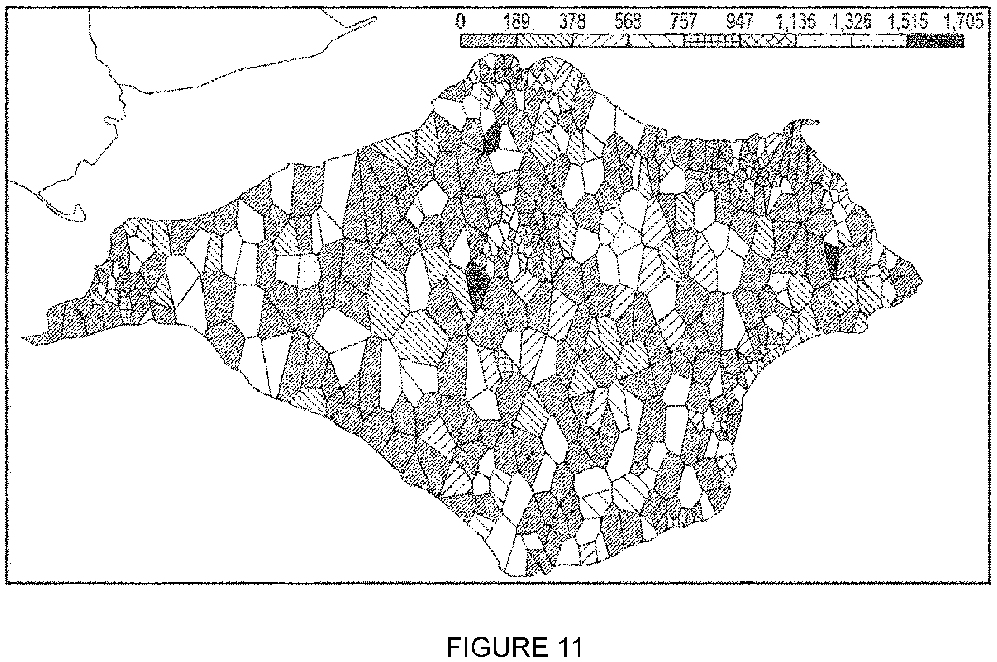

Figure 8 illustrates the distribution of origin partitions in the original OD data whilst Figure 9 illustrates the distribution of destination partitions in the original OD data. Figures 10 and 11 illustrate, respectively, the distribution of origin partitions and destination partitions in modified OD data which comprises the original OD data plus replicated OD data generated according to the data replication process described above. It will be appreciated that the distribution of partitions looks mostly the same, but the scale on the top is different when comparing the original OD data to the modified OD data, indicating that new OD data has been generated whilst preserving the origin OD data's distribution. The empty (white) partitions indicate partitions which are not indicated as origins (or destinations, as the case may be) in the OD data concerned).

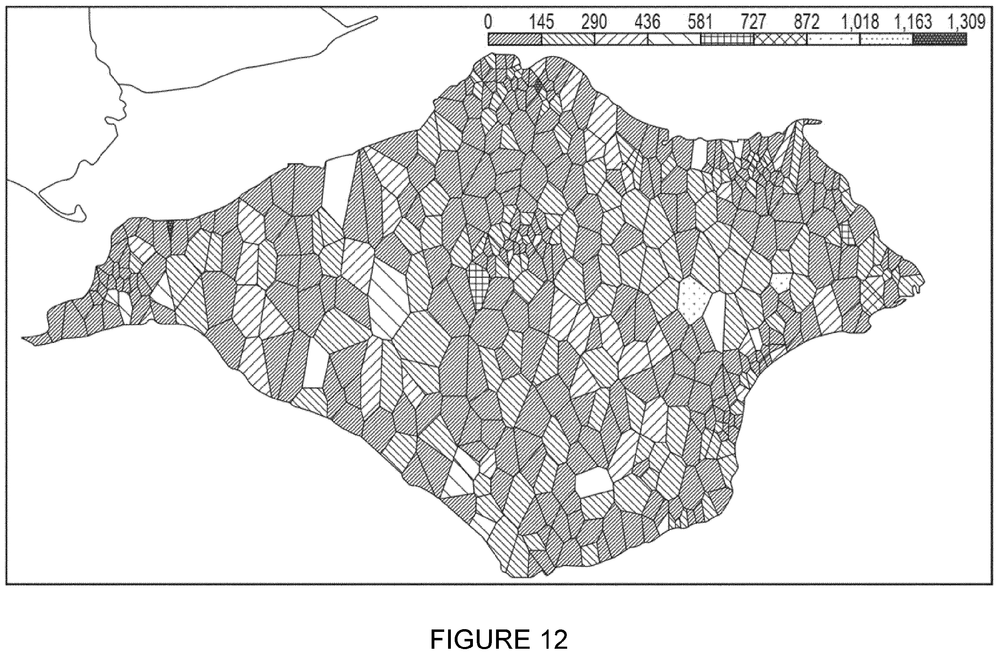

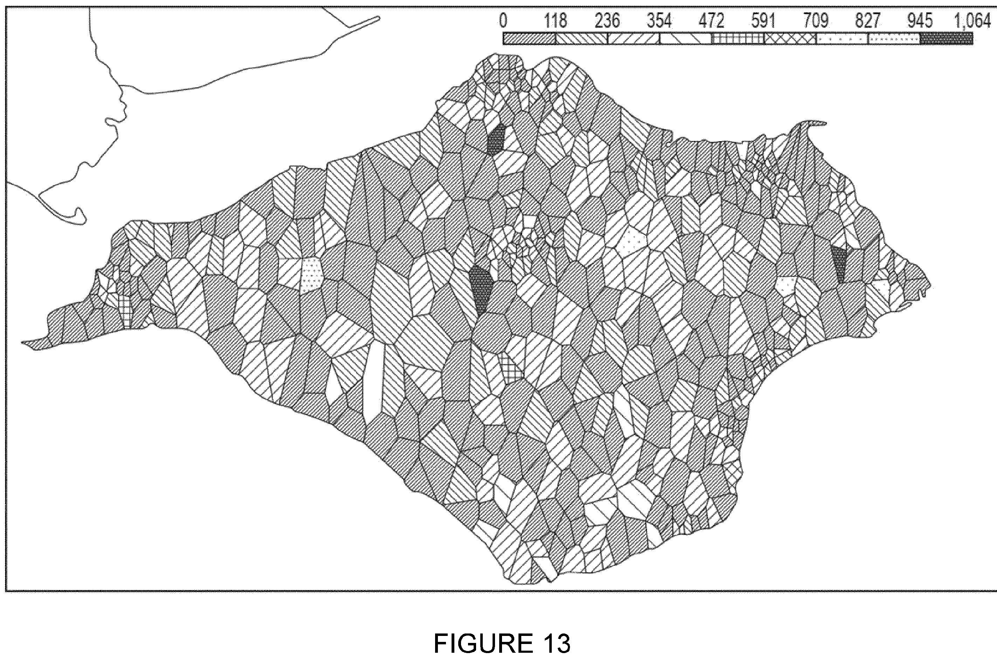

Figure 12 illustrates the distribution of origin partitions in modified OD data comprising the original OD data and new OD data generated using the data replication process and the random uniform saturation process (with a 40% probability to use the random uniform saturation process and a 60% probability to use the data replication process in the case of each newly generated OD record). Figure 13 illustrates the distribution of destination partitions in this modified OD data.

It will be appreciated that, comparing Figure 12 to Figure 8 and comparing Figure 13 to Figure 9, there are fewer empty (white) partitions in Figures 12 and 13, indicating that there are fewer partitions which are not indicated as origins (or destinations, as the case may be) in the modified OD data compared to the original OD data, and otherwise the distributions of origin and destination partitions have not significantly changed. This indicates that the application of the random uniform saturation process successfully populated the unused partitions with OD data.

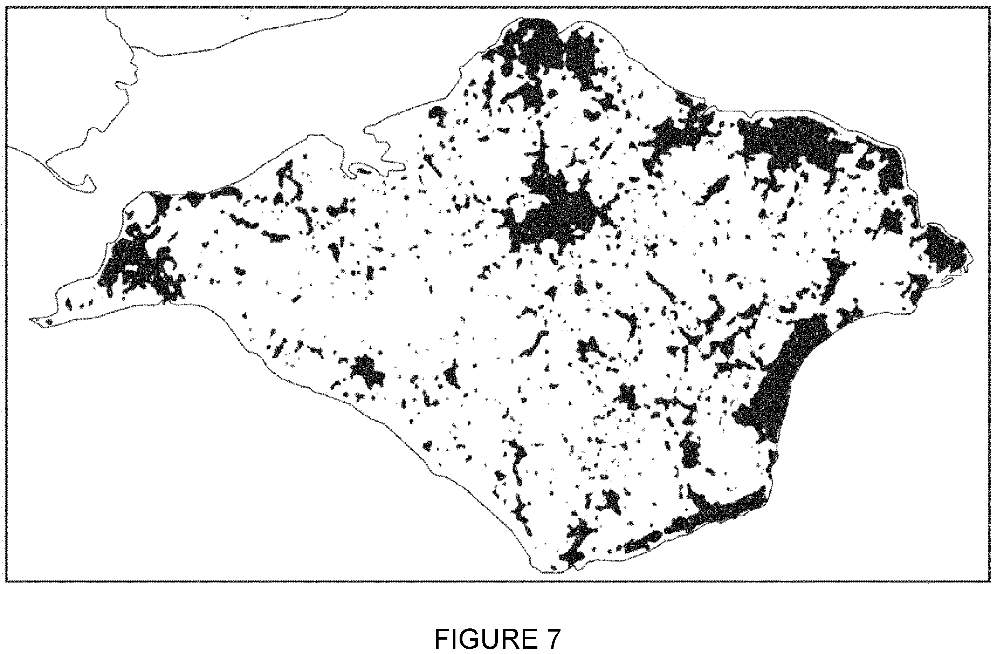

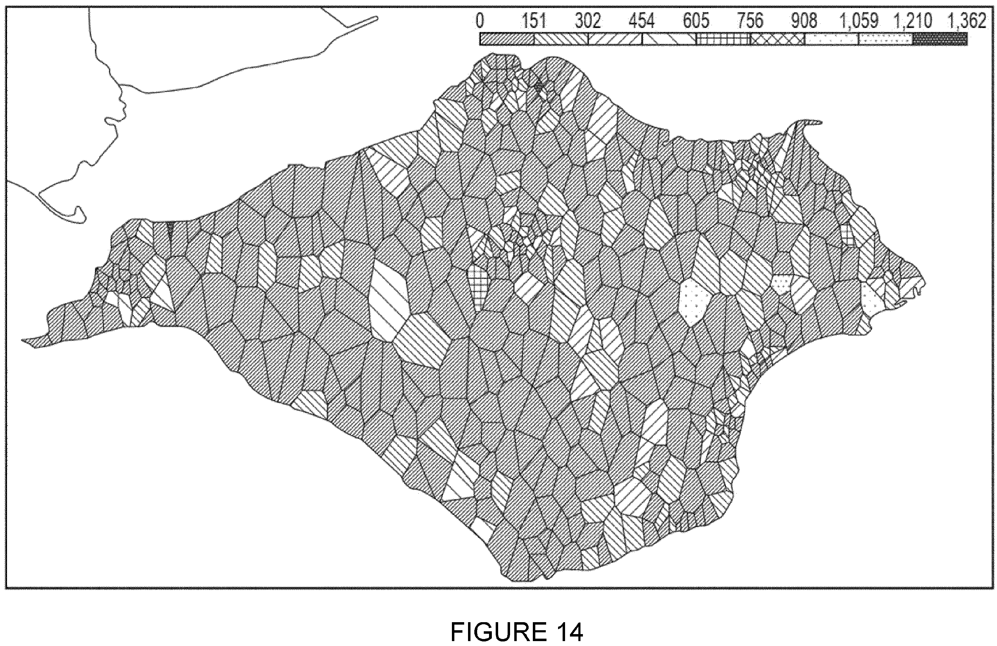

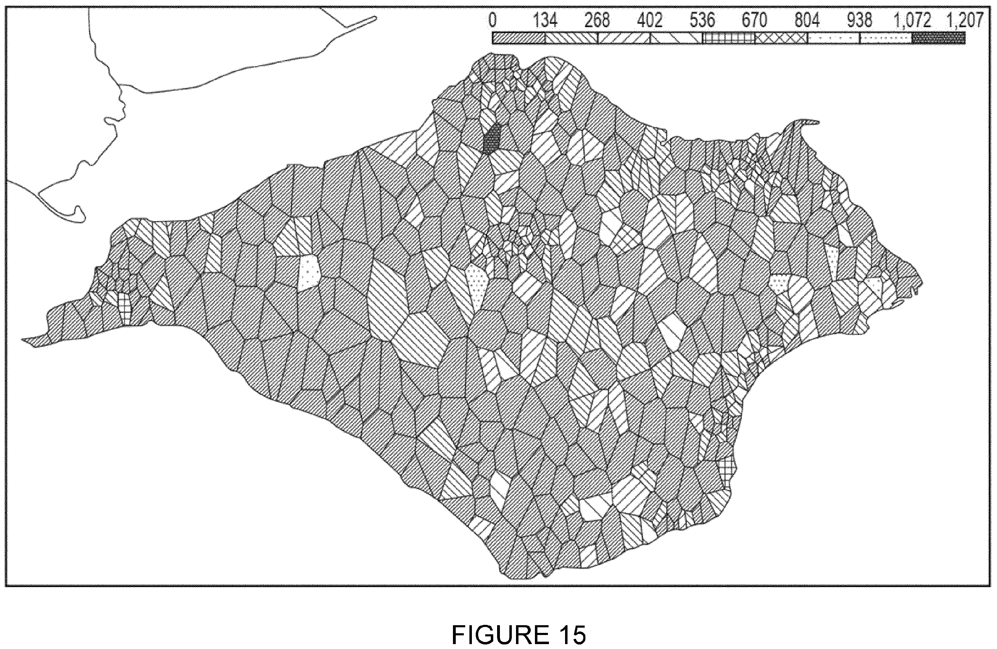

Figure 14 illustrates the distribution of origin partitions in modified OD data comprising the original OD data and new OD data generated using the data replication process and the parametrized saturation process, using a Gamma distribution (with a 40% probability to use the parametrized saturation process and a 60% probability to use the data replication process in the case of each newly generated OD record). Figure 15 illustrates the distribution of destination partitions in this modified OD data. It will be appreciated, comparing Figures 8 and 14 and comparing Figures 9 and 15, both with reference to Figure 7 showing household locations, that the parametrized saturation process is successful in populating partitions having household locations therein with new OD data records.

Conventional methods for mobility data processing tend not to address the issue with incomplete or sparse data. Generally, conventional methods tend to assume a perfect dataset for human mobility, having no tools to deal with situations where this assumption falters, which do arise quite frequently in the real world cases. The methodologies disclosed herein, on the other hand, uniquely offer modeling instruments to efficiently deal with these setbacks, namely uniform and parametrized saturation.

The methodologies disclosed herein lead to, among others, the following benefits:
- Easily scalable, fast modeling of real-world distribution of Origin-Destination pairs, offering variety and complexity in trips
- Ability to complement sparse and missing mobility data, which is oftentimes the case in real-world scenarios, by utilizing uniform saturation
- Enhancing incomplete or highly skewed real-world distributions by utilizing parametrized saturation

For instance, the methodologies disclosed herein may be particularly useful in cases where OD data has not been fully collected, e.g. only a sparse sample has been collected and/or some areas have been missed. The methodologies disclosed herein may also be particularly useful in cases where it is desired to simulate population growth (permanent or transitory - e.g. due to tourists or other visitors) in areas for which there does not exist abundant OD data.

Clearly, being able to set up and run large-scale complex simulations based off of real-world data is one of the paramount capabilities of a Social Digital Twin platform, and Obtaining or approximating/simulating real-world data that is as complete and dense as possible is crucial to running large-scale complex simulations based off of real-world data (which may be useful e.g. in a Social Digital Twin platform). The methodologies disclosed herein provide the following capabilities (among others):
- Fast and accurate resampling of real world data, providing the ability to densely populate the simulation.
- Equally fast ability to saturate real world data with missing locations, where required.
- Options to draw human mobility patterns from parametrized distributions, with parameters retaining live statistics of natural human movement.

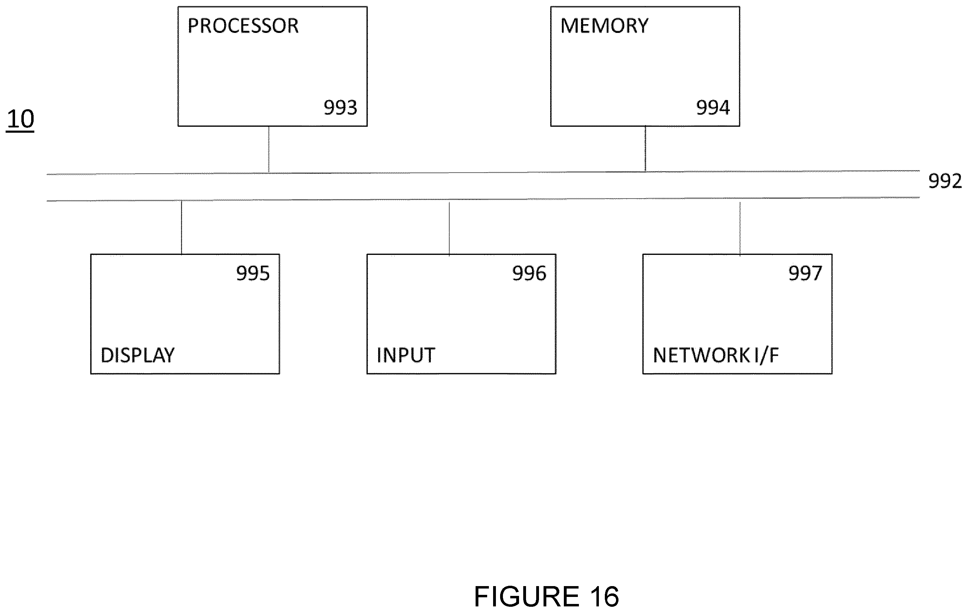

Figure 16 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S11-S16, S21-S25, S31-S43, and S51-S63.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S11-S16, S21-S25, S31-S43, and S51-S63. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store OD data and/or new OD data and/or information about geographical areas/partitions and/or any distributions described above and/or any parameters of a distribution described above and/or trip differences and/or an average tip distance and/or trip lengths and/or an average trip length and/or household locations and/or input data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as any matrix described above and/or a representation of any distribution described above and/or a representation of OD data and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 16. Such a computing device need not have every component illustrated in Figure 16, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention, e.g. any of steps S11-S16, S21-S25, S31-S43, and S51-S63, may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:
obtaining origin-destination, OD, data comprising a plurality of records, each record indicating a geographical area of a plurality of geographical areas as an origin and indicating another geographical area of the plurality of geographical areas as a destination;
generating an origin distribution by counting, for each geographical area indicated as the origin in the OD data, the number of records which indicate the geographical area as the origin;
generating a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and
generating new OD data by:
generating at least one new record using a replication process; and
generating another at least one new record using a first augmentation process and/or a second augmentation process,
wherein the replication process comprises:
selecting, as an origin, a geographical area from among the plurality of geographical areas with probability according to the origin distribution; and
selecting, as a destination, a geographical area from among the plurality of geographical areas with probability according to the destination distribution corresponding to the geographical area selected as the origin,
wherein the first augmentation process comprises:
randomly selecting as an origin a geographical area from a first subset of the geographical areas, each geographical area of the first subset being indicated as an origin in the OD data less than a first threshold number of times; and
randomly selecting as a destination a geographical area from a second subset of the geographical areas, each geographical area of the second subset being indicated as a destination in the OD data less than a second threshold number of times,
and wherein the second augmentation process comprises:
sampling a trip distance from a parametrized distribution; and
performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

2. The computer-implemented method as claimed in claim 1, wherein each record in the OD data includes a departure time, wherein the computer-implemented method comprises determining an average of the differences between consecutive departure times, wherein generating the new OD data comprises generating a plurality of new records, and wherein generating each of second and further records comprises generating a departure time by sampling a departure time difference from a Poisson distribution **characterized by** the average of the differences between consecutive departure times in the OD data and adding the departure time difference to the departure time of the preceding new record.

3. The computer-implemented method as claimed in claim 1 or claim 2, wherein the plurality of geographical areas are partitions of a geographical region.

4. The computer-implemented method as claimed in any of claims 1 to 3,
wherein generating the origin distribution comprises normalizing the numbers of records to generate a probability mass function and wherein in the replication process selecting, as an origin, a geographical area comprises sampling a geographical area as a random variable with the probability mass function of the origin distribution, and
wherein generating each destination distribution comprises normalizing the numbers of records to generate a probability mass function and wherein in the replication process selecting, as a destination, a geographical area comprises sampling a geographical area as a random variable with the probability mass function of the destination distribution concerned.

5. The computer-implemented method as claimed in any of the preceding claims, wherein the parametrized distribution comprises a Gamma distribution or a LogNormal distribution.

6. The computer-implemented method as claimed in any of the preceding claims, wherein the parametrized distribution is **characterized by** at least a predetermined average trip distance.

7. The computer-implemented method as claimed in any of the preceding claims, wherein the parametrized distribution is based on data indicating a plurality of trip distances.

8. The computer-implemented method as claimed in any of the preceding claims, wherein the sampling process comprises, if the distance is not within the threshold distance range, randomly selecting as the candidate destination location at least one further household location from among the plurality of household locations until the distance between the candidate origin location and the candidate destination location is within the threshold distance range or until a threshold number of further household locations have been selected.

9. The computer-implemented method as claimed in claim 8, wherein the sampling process comprises, if the distance between the candidate origin location and the candidate destination location is within the threshold distance range after selecting at least one further household location, selecting the geographical area including the candidate origin location as an origin and selecting the geographical area including the candidate destination location as a destination.

10. The computer-implemented method as claimed in claim 8 or claim 9, wherein the second augmentation process comprises, if a threshold number of further household locations have been selected, repeating the sampling process.

11. The computer-implemented method as claimed in any of the preceding claims, wherein the threshold distance range comprises as an upper limit the sampled trip distance plus a first amount and as a lower limit the sampled trip distance minus a second amount.

12. The computer-implemented method as claimed in any of the preceding claims, wherein generating the new OD data comprises generating a plurality of new records and, for each new record, determining to use the replication process with a first probability and determining to use the first or second augmentation process with a second probability.

13. The computer-implemented method as claimed in claim 12, wherein the first and second probabilities are determined according to a desired level of data augmentation.

14. A computer program which, when run on a computer, causes the computer to carry out a method comprising:
obtaining origin-destination, OD, data comprising a plurality of records, each record indicating a geographical area of a plurality of geographical areas as an origin and indicating another geographical area of the plurality of geographical areas as a destination;
generating an origin distribution by counting, for each geographical area indicated as the origin in the OD data, the number of records which indicate the geographical area as the origin;
generating a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and
generating new OD data by:
generating at least one new record using a replication process; and
generating another at least one new record using a first augmentation process and/or a second augmentation process,
wherein the replication process comprises:
selecting, as an origin, a geographical area from among the plurality of geographical areas with probability according to the origin distribution; and
selecting, as a destination, a geographical area from among the plurality of geographical areas with probability according to the destination distribution corresponding to the geographical area selected as the origin,
wherein the first augmentation process comprises:
randomly selecting as an origin a geographical area from a first subset of the geographical areas, each geographical area of the first subset being indicated as an origin in the OD data less than a first threshold number of times; and
randomly selecting as a destination a geographical area from a second subset of the geographical areas, each geographical area of the second subset being indicated as a destination in the OD data less than a second threshold number of times,
wherein the second augmentation process comprises:
sampling a trip distance from a parametrized distribution; and
performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

15. An information processing apparatus comprising a memory and a processor connected to the memory, wherein the processor is configured to:
obtain origin-destination, OD, data comprising a plurality of records, each record indicating a geographical area of a plurality of geographical areas as an origin and indicating another geographical area of the plurality of geographical areas as a destination;
generate an origin distribution by counting, for each geographical area indicated as the origin in the OD data, the number of records which indicate the geographical area as the origin;
generate a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and
generate new OD data by:
generating at least one new record using a replication process; and
generating another at least one new record using a first augmentation process and/or a second augmentation process,
wherein the replication process comprises:
selecting, as an origin, a geographical area from among the plurality of geographical areas with probability according to the origin distribution; and
selecting, as a destination, a geographical area from among the plurality of geographical areas with probability according to the destination distribution corresponding to the geographical area selected as the origin,
wherein the first augmentation process comprises:
randomly selecting as an origin a geographical area from a first subset of the geographical areas, each geographical area of the first subset being indicated as an origin in the OD data less than a first threshold number of times; and
randomly selecting as a destination a geographical area from a second subset of the geographical areas, each geographical area of the second subset being indicated as a destination in the OD data less than a second threshold number of times,
wherein the second augmentation process comprises:
sampling a trip distance from a parametrized distribution; and
performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

## Amended claims

### Amended claims in accordance with Rule 137(2) EPC.

1. A computer-implemented method comprising:
obtaining (S11) origin-destination, OD, data comprising a plurality of records, each record indicating a geographical area of a plurality of geographical areas as an origin and indicating another geographical area of the plurality of geographical areas as a destination;
generating (S14) an origin distribution by counting, for each geographical area indicated as the origin in the OD data, the number of records which indicate the geographical area as the origin;
generating (S15) a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and
generating (S16) new OD data by:
generating at least one new record using a replication process (S161); and
generating another at least one new record using a first augmentation process (S162) and/or a second augmentation process (S163),
wherein the replication process (S161) comprises:
selecting, as an origin, a geographical area from among the plurality of geographical areas with probability according to the origin distribution; and
selecting, as a destination, a geographical area from among the plurality of geographical areas with probability according to the destination distribution corresponding to the geographical area selected as the origin,
wherein the first augmentation process (S162) comprises:
randomly selecting as an origin a geographical area from a first subset of the geographical areas, each geographical area of the first subset being indicated as an origin in the OD data less than a first threshold number of times; and
randomly selecting as a destination a geographical area from a second subset of the geographical areas, each geographical area of the second subset being indicated as a destination in the OD data less than a second threshold number of times,
and wherein the second augmentation process (S163) comprises:
sampling a trip distance from a parametrized distribution; and
performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

2. The computer-implemented method as claimed in claim 1, wherein each record in the OD data includes a departure time, wherein the computer-implemented method comprises determining an average of the differences between consecutive departure times, wherein generating the new OD data comprises generating a plurality of new records, and wherein generating each of second and further records comprises generating a departure time by sampling a departure time difference from a Poisson distribution **characterized by** the average of the differences between consecutive departure times in the OD data and adding the departure time difference to the departure time of the preceding new record.

3. The computer-implemented method as claimed in claim 1 or claim 2, wherein the plurality of geographical areas are partitions of a geographical region.

4. The computer-implemented method as claimed in any of claims 1 to 3,
wherein generating (S14) the origin distribution comprises normalizing the numbers of records to generate a probability mass function and wherein in the replication process selecting, as an origin, a geographical area comprises sampling a geographical area as a random variable with the probability mass function of the origin distribution, and
wherein generating (S15) each destination distribution comprises normalizing the numbers of records to generate a probability mass function and wherein in the replication process selecting, as a destination, a geographical area comprises sampling a geographical area as a random variable with the probability mass function of the destination distribution concerned.

5. The computer-implemented method as claimed in any of the preceding claims, wherein the parametrized distribution comprises a Gamma distribution or a LogNormal distribution.

6. The computer-implemented method as claimed in any of the preceding claims, wherein the parametrized distribution is **characterized by** at least a predetermined average trip distance.

7. The computer-implemented method as claimed in any of the preceding claims, wherein the parametrized distribution is based on data indicating a plurality of trip distances.

8. The computer-implemented method as claimed in any of the preceding claims, wherein the sampling process comprises, if the distance is not within the threshold distance range, randomly selecting as the candidate destination location at least one further household location from among the plurality of household locations until the distance between the candidate origin location and the candidate destination location is within the threshold distance range or until a threshold number of further household locations have been selected.

9. The computer-implemented method as claimed in claim 8, wherein the sampling process comprises, if the distance between the candidate origin location and the candidate destination location is within the threshold distance range after selecting at least one further household location, selecting the geographical area including the candidate origin location as an origin and selecting the geographical area including the candidate destination location as a destination.

10. The computer-implemented method as claimed in claim 8 or claim 9, wherein the second augmentation process (S163) comprises, if a threshold number of further household locations have been selected, repeating the sampling process.

11. The computer-implemented method as claimed in any of the preceding claims, wherein the threshold distance range comprises as an upper limit the sampled trip distance plus a first amount and as a lower limit the sampled trip distance minus a second amount.

12. The computer-implemented method as claimed in any of the preceding claims, wherein generating the new OD data comprises generating a plurality of new records and, for each new record, determining to use the replication process with a first probability and determining to use the first or second augmentation process with a second probability.

13. The computer-implemented method as claimed in claim 12, wherein the first and second probabilities are determined according to a desired level of data augmentation.

14. A computer program which, when run on a computer, causes the computer to carry out a method comprising:
obtaining (S11) origin-destination, OD, data comprising a plurality of records, each record indicating a geographical area of a plurality of geographical areas as an origin and indicating another geographical area of the plurality of geographical areas as a destination;
generating (S14) an origin distribution by counting, for each geographical area indicated as the origin in the OD data, the number of records which indicate the geographical area as the origin;
generating (S15) a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and
generating (S16) new OD data by:
generating at least one new record using a replication process (S161); and
generating another at least one new record using a first augmentation process (S162) and/or a second augmentation process (S163),
wherein the replication process (S161) comprises:
selecting, as an origin, a geographical area from among the plurality of geographical areas with probability according to the origin distribution; and
selecting, as a destination, a geographical area from among the plurality of geographical areas with probability according to the destination distribution corresponding to the geographical area selected as the origin,
wherein the first augmentation process (S162) comprises:
randomly selecting as an origin a geographical area from a first subset of the geographical areas, each geographical area of the first subset being indicated as an origin in the OD data less than a first threshold number of times; and
randomly selecting as a destination a geographical area from a second subset of the geographical areas, each geographical area of the second subset being indicated as a destination in the OD data less than a second threshold number of times,
wherein the second augmentation process (S163) comprises:
sampling a trip distance from a parametrized distribution; and
performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.

15. An information processing apparatus (10) comprising a memory (994) and a processor (993) connected to the memory (994), wherein the processor (993) is configured to:
obtain origin-destination, OD, data comprising a plurality of records, each record indicating a geographical area of a plurality of geographical areas as an origin and indicating another geographical area of the plurality of geographical areas as a destination;
generate an origin distribution by counting, for each geographical area indicated as the origin in the OD data, the number of records which indicate the geographical area as the origin;
generate a plurality of destination distributions corresponding respectively to the geographical areas indicated as origins in the OD data, wherein for each geographical area indicated as an origin, generating the corresponding destination distribution comprises selecting, as a subset of the plurality of records, the records which indicate the geographical area as the origin, and counting, for each geographical area indicated as the destination in the subset, the number of records which indicate the geographical area as the destination; and
generate new OD data by:
generating at least one new record using a replication process; and
generating another at least one new record using a first augmentation process and/or a second augmentation process,
wherein the replication process comprises:
selecting, as an origin, a geographical area from among the plurality of geographical areas with probability according to the origin distribution; and
selecting, as a destination, a geographical area from among the plurality of geographical areas with probability according to the destination distribution corresponding to the geographical area selected as the origin,
wherein the first augmentation process comprises:
randomly selecting as an origin a geographical area from a first subset of the geographical areas, each geographical area of the first subset being indicated as an origin in the OD data less than a first threshold number of times; and
randomly selecting as a destination a geographical area from a second subset of the geographical areas, each geographical area of the second subset being indicated as a destination in the OD data less than a second threshold number of times,
wherein the second augmentation process comprises:
sampling a trip distance from a parametrized distribution; and
performing a sampling process comprising randomly selecting, as a candidate origin location, a household location from among a plurality of household locations, randomly selecting, as a candidate destination location, another household location from among the plurality of household locations, determining if a distance between the candidate origin location and the candidate destination location is within a threshold distance range based on the sampled trip distance and, if the distance is within the threshold distance range, selecting the geographical area including the candidate origin location as an origin and selecting the geographical area including the candidate destination location as a destination.
